# FASCICULE DE BREVET EUROPEEN

(11) **EP 3 702 278 B1**
(45) Date de publication et mention de la délivrance du brevet: **19.05.2021**
(21) Numéro de dépôt: 20158963.7
(22) Date de dépôt: 24.02.2020
(51) Int. Cl.: B64C 27/57, B64C 27/64, B64C 27/68, B64C 13/28, B64C 13/36, B64C 27/605, B64C 27/59

(54) **DISPOSITIF DE RENVOI ASSISTE ET AERONEF**
VORRICHTUNG ZUR ASSISTIERTEN UMLENKUNG, UND LUFTFAHRZEUG
DEVICE FOR ASSISTED TRANSMISSION AND AIRCRAFT

(30) Priorité: 27.02.2019 FR 1902026
(43) Date de publication de la demande: 02.09.2020
(73) Titulaire: Airbus Helicopters, 13725 Marignane Cedex (FR)
(72) Inventeur: HONNORAT, Olivier, 13290 AIX EN PROVENCE (FR)
(74) Mandataire: GPI Brevets

(56) Documents cités:
- EP-A1- 2 266 878
- EP-A1- 3 330 177
- FR-A1- 2 931 132
- FR-A1- 2 973 775

## Description

La présente invention concerne un dispositif de renvoi assisté par exemple d'un système de pilotage d'un aéronef et un aéronef.

L'invention se situe donc dans le domaine restreint des systèmes de commande d'aéronefs voire de giravions compte tenu notamment des spécificités rencontrées dans le domaine aéronautique.

Par exemple, un hélicoptère comporte communément un rotor principal de sustentation et d'avancement pourvu d'une pluralité de pales décrivant un cône. La portance générale générée par ce rotor principal peut alors être décomposée en une force verticale de sustentation et une force horizontale qui assure la translation de l'hélicoptère. Par suite, le rotor principal assure bien la sustentation et l'avancement de l'hélicoptère.

De plus, en contrôlant la forme et l'inclinaison dudit cône par rapport à un référentiel de l'hélicoptère, un pilote peut diriger précisément l'hélicoptère. Afin d'agir sur ce cône, l'hélicoptère est pourvu de moyens spécifiques destinés à faire varier le pas de chaque pale et commandés notamment par des commandes de vol manœuvrables par un pilote.

Lorsque le pilote manœuvre une première commande de vol, le pilote ordonne une variation collective de pas, c'est à dire une variation identique du pas de toutes les pales, pour faire varier l'intensité de la portance générale du rotor principal de manière à contrôler l'altitude et la vitesse de l'hélicoptère. La première commande de vol peut prendre la forme d'un levier de pas collectif ou un équivalent.

Par ailleurs, pour modifier la direction de la portance générale générée par le rotor principal, il convient d'incliner ledit cône en réalisant une variation non pas collective mais cyclique de pas. Dans ce cas de figure, le pas d'une pale varie en fonction de son azimut et passe durant un tour complet d'une valeur maximale à une valeur minimale obtenues dans des azimuts différents.

En commandant la variation cyclique du pas des pales à l'aide d'une deuxième commande de vol, par exemple un manche cyclique ou un équivalent, le pilote contrôle ainsi l'assiette de l'aéronef et sa translation.

Les commandes de vol du pilote sont à cet effet reliées aux pales via des chaînes mécaniques dénommées parfois « timonerie ». De telles chaînes mécaniques peuvent comprendre au moins une bielle, au moins un moyen de renvoi, un combinateur, un déphaseur, des servocommandes, un ensemble de plateaux cycliques...

Par ailleurs, l'aéronef peut comporter un système de pilotage automatique. Pour stabiliser l'aéronef, le système de pilotage automatique peut comporter au moins un vérin rapide à faible autorité placé en série dans une chaîne mécanique de commande de vol. Un tel vérin est parfois dénommé « vérin série » en raison de son emplacement. Chaque vérin série est piloté par un calculateur qui stabilise l'hélicoptère en allongeant ou en rétractant le vérin à une fréquence élevée de façon transparente pour le pilote afin d'agir rapidement sur le pas des pales. L'ordre donné par chaque vérin série se superpose aux mouvements de la chaîne mécanique le portant. Le vérin série peut être ancré par un vérin parallèle ou encore un système générant des frictions en amont du vérin série. Un tel vérin parallèle est parfois dénommé « vérin de trim » et prend usuellement la forme d'un vérin lent à grande autorité.

Un vérin série peut être positionné sur une bielle d'une chaîne mécanique et est connecté au calculateur par un harnais électrique.

Bien que satisfaisante, une telle architecture peut présenter des inconvénients divers.

Un vérin série se déplace de fait en translation lorsque la commande de vol correspondante est manœuvrée par un pilote ou un vérin de trim. Par suite, le harnais électrique doit tolérer un tel déplacement sur toute l'amplitude de déplacement de la commande de vol. Le harnais électrique est donc dimensionné pour ne pas gêner les mouvements de la chaîne mécanique concernée et du vérin série associé. En pratique, le harnais électrique peut présenter une longueur maximisée qui tend à générer un surpoids. En outre, l'extrémité du harnais débouchant sur le vérin série peut être assouplie pour autoriser sa déformation lorsque le vérin série se déplace.

En outre, un vérin série peut s'étendre verticalement. Le vérin série ou le harnais relié au vérin série peut alors représenter un premier organe massique qui déséquilibre la commande de vol reliée à ce vérin série. Un deuxième organe massique susceptible de présenter une masse importante peut alors être agencé par exemple sur un pied de la commande de vol en compensation.

En résumé, l'agencement d'un vérin série sur une chaîne mécanique reliant une commande de vol à un rotor peut induire l'agencement d'organes de friction et/ou de harnais particuliers et/ou d'organes massiques de compensation.

Le document FR 2931132 décrit un système d'assistance électrique ne répondant pas à cette problématique.

Les documents FR 2973775, EP 3330177 et EP 2266878 sont aussi connus.

La présente invention a alors pour objet de proposer un dispositif de renvoi innovant pour tendre à s'affranchir des limitations mentionnées ci-dessus.

Un tel dispositif de renvoi est muni d'un levier amont et d'un levier aval.

De plus, le dispositif de renvoi comporte un système de déphasage relié au levier amont et au levier aval pour qu'une rotation du levier amont autour d'un axe de rotation induise une rotation du levier aval autour de cet axe de rotation, le système de déphasage comprenant un actionneur linéaire porté par le levier amont, ledit actionneur linéaire ayant une tige de sortie, ladite tige de sortie ayant uniquement un degré de liberté en translation par rapport au levier amont, ladite tige de sortie étant reliée par une liaison hélicoïdale de sortie au levier aval pour qu'une translation de la tige de sortie génère une rotation du levier aval autour dudit axe de rotation par rapport au levier amont.

L'expression « actionneur » et l'expression « vérin » utilisées dans le cadre de l'invention désignent chacune un dispositif mécanique, électrique, pneumatique, hydraulique ou autre apte à mettre en mouvement une pièce mécanique par rapport à une autre pièce mécanique.

Le levier amont et le levier aval sont mobiles conjointement en rotation autour d'un axe de rotation lorsque le levier amont est mis en rotation autour de cet axe de rotation. De plus, le levier aval présente une liberté de mouvement en rotation autour de l'axe de rotation par rapport au levier amont sur commande du système de déphase.

Dès lors, une rotation du levier amont induite par le déplacement d'une commande peut provoquer une rotation autour de l'axe de rotation du levier aval via le système de déphasage. En effet, une rotation du levier amont peut provoquer une rotation de la tige de sortie qui induit une même rotation du levier aval.

De plus, l'actionneur linéaire implanté sur le levier amont représente un vérin agencé en série entre le levier amont et le levier aval, un tel vérin étant qualifié de manière usuelle de vérin série. Cet actionneur linéaire peut être commandé par un calculateur directement ou indirectement pour déplacer en rotation le levier aval par rapport au levier amont en translatant la tige de sortie. Le système de déphasage agit dans ce mode comme un déphaseur angulaire entre le levier amont et le levier aval.

Ainsi, au sein d'un aéronef et notamment d'une chaîne mécanique interposée entre une commande de vol manœuvrable par un pilote humain et un organe aérodynamique tel qu'une pale par exemple, le dispositif de renvoi permet de superposer un ordre de déplacement transmis par le pilote humain au levier amont avec un ordre de stabilisation généré par un pilote automatique transmis au levier aval via l'actionneur linéaire. Le déphasage angulaire introduit par l'actionneur linéaire est transparent pour le pilote.

Cette implantation particulière de l'actionneur linéaire permet d'obtenir un dispositif de renvoi muni en son sein d'un vérin série qui ne se déplace pas en translation contrairement à certains arts antérieurs pour lesquels le vérin série est déplacé en translation par une bielle. Dès lors, l'invention n'implique pas nécessairement l'utilisation d'un harnais électrique apte à être déformé ou déplacé pour tolérer une translation de l'actionneur linéaire formant un tel vérin série. De plus, l'actionneur linéaire n'est dans ce cas pas nécessairement agencé verticalement et n'implique pas nécessairement l'utilisation de masses de compensation.

Par conséquent, un dispositif de renvoi selon l'invention peut tendre à simplifier l'intégration d'un vérin série notamment dans une chaîne mécanique de commande de vol d'un giravion.

Ce dispositif de renvoi peut de plus comporter une ou plusieurs des caractéristiques qui suivent.

Selon une première réalisation de l'actionneur linéaire, cet actionneur linéaire peut comporter un vérin linéaire muni de la tige de sortie.

Le vérin linéaire peut par exemple prendre la forme d'un vérin électrique voire d'un vérin hydraulique ou pneumatique muni de deux chambres hydrauliques ou pneumatiques séparées par le piston. Les chambres sont alimentées en liquide ou gaz par un distributeur pouvant être commandé par un calculateur.

Selon une deuxième réalisation de l'actionneur linéaire, cet actionneur linéaire comporte un vérin rotatif intermédiaire. Ce vérin rotatif intermédiaire comprend une tige intermédiaire mobile en rotation, par exemple autour de l'axe de rotation.

Indépendamment de cet aspect, la tige intermédiaire est reliée à la tige de sortie par un système de transformation d'un mouvement rotatif en un mouvement translatif.

L'expression « vérin rotatif intermédiaire » désigne un vérin électrique, pneumatique, ou hydraulique par exemple qui est interposé entre le levier amont et le levier aval et comporte une tige de travail dénommée tige intermédiaire mobile en rotation.

Par exemple, le vérin rotatif intermédiaire comprend un corps intermédiaire et un rotor intermédiaire, le rotor intermédiaire étant mobile en rotation par rapport au corps intermédiaire, le rotor intermédiaire étant solidaire en rotation de la tige intermédiaire. Le corps intermédiaire peut être solidarisé au levier amont.

L'expression « rotor intermédiaire » désigne un organe rotatif de l'actionneur linéaire, le terme « intermédiaire » étant utilisé pour distinguer ce rotor d'un autre rotor éventuel du dispositif de renvoi. De même, le corps du vérin rotatif intermédiaire est qualifié d'intermédiaire pour être distingué d'un autre corps éventuel.

Sur un vérin rotatif intermédiaire de type moteur électrique rotatif, le corps intermédiaire peut comprendre un stator intermédiaire en regard du rotor intermédiaire, le stator intermédiaire et le rotor intermédiaire étant d'un type usuel sur un moteur électrique.

Eventuellement, le système de transformation d'un mouvement rotatif en un mouvement translatif peut comporter une liaison hélicoïdale d'entrée.

Par exemple, ladite liaison hélicoïdale d'entrée présente un pas de vis inférieur à un pas de vis de la liaison hélicoïdale de sortie. Selon un exemple, la liaison hélicoïdale d'entrée présente un petit pas afin qu'une rotation importante de la tige intermédiaire induise une translation faible de la tige de sortie.

Eventuellement, la liaison hélicoïdale d'entrée comporte une gorge en hélice d'entrée et un pion d'entrée disposé au moins partiellement dans la gorge en hélice d'entrée, la gorge en hélice d'entrée étant portée par la tige de sortie et le pion d'entrée étant porté par la tige intermédiaire ou la gorge en hélice d'entrée étant portée par la tige intermédiaire et le pion d'entrée étant porté par la tige de sortie.

Selon un autre exemple, la liaison hélicoïdale d'entrée peut comporter un écrou intermédiaire en prise sur la tige intermédiaire, à savoir coopérant avec la tige intermédiaire, ledit écrou intermédiaire étant solidaire en rotation du levier amont et mobile en translation par rapport au levier amont, ledit écrou intermédiaire étant solidaire de la tige de sortie. L'écrou intermédiaire peut donc n'avoir aucun degré de liberté par rapport à la tige de sortie.

L'écrou intermédiaire et la tige de sortie peuvent former une seule et même pièce ou l'écrou intermédiaire peut être solidarisé par des moyens usuels à la tige de sortie.

Pour éviter que l'écrou intermédiaire suive le déplacement en rotation du rotor intermédiaire, cet écrou intermédiaire est bloqué en rotation par rapport au levier amont soit directement soit via la tige de sortie, par exemple par une liaison glissière.

De manière complémentaire ou alternative, la tige de sortie elle-même peut être solidarisée en rotation au levier amont, par une liaison adaptée et par exemple une liaison glissière, en étant mobile en translation par rapport au levier amont.

Ainsi, au moins la tige de sortie ou un écrou intermédiaire solidaire de la tige de sortie est relié au levier amont par au moins une liaison liant en rotation autour de l'axe de rotation le levier amont et la tige de sortie.

Ladite au moins une liaison peut comprendre une liaison glissière comportant au moins une cannelure ou clavette.

La liaison glissière peut être éventuellement remplacée par une liaison pivot glissante ou une liaison sphère-cylindre, ou deux liaisons sphère-plan symétriques.

Selon un autre aspect et selon une première variante de la liaison hélicoïdale de sortie, ladite liaison hélicoïdale de sortie peut comporter un écrou de sortie solidaire du levier aval, ledit écrou de sortie comprenant un taraudage en prise sur un taraudage complémentaire de ladite tige de sortie.

L'écrou de sortie et le levier aval peuvent former une seule et même pièce ou l'écrou de sortie peut être solidarisé par des moyens usuels au levier aval.

Selon cet exemple, la liaison hélicoïdale de sortie comporte un taraudage de la tige de sortie en prise avec un taraudage d'un écrou de sortie solidaire du levier aval.

Selon une deuxième variante de la liaison hélicoïdale de sortie, la liaison hélicoïdale de sortie peut comporter une gorge en hélice de sortie et un pion de sortie de forme complémentaire disposé au moins partiellement dans la gorge en hélice de sortie, la gorge en hélice de sortie étant portée par la tige de sortie et le pion de sortie étant porté par le levier aval ou la gorge en hélice de sortie étant portée par le levier aval et le pion de sortie étant porté par la tige de sortie.

Selon cet autre exemple, la liaison hélicoïdale de sortie peut présenter un grand pas afin qu'une translation importante de la tige de sortie induise une rotation faible du levier aval, par exemple pour qu'un centimètre de translation de la tige de sortie permette d'obtenir un degré de rotation du levier aval. Une telle liaison hélicoïdale de sortie présente l'avantage d'être précise.

Selon un autre aspect, le dispositif de renvoi peut comporter un vérin rotatif général, ledit vérin rotatif général comprenant un rotor général solidaire du levier amont, ledit vérin rotatif général comprenant un corps général solidaire d'un support fixe.

L'expression « vérin rotatif général» désigne un vérin électrique, pneumatique, ou hydraulique par exemple apte à mettre en rotation le levier amont par rapport à un support fixe du dispositif ou à un organe d'un véhicule par exemple.

L'expression « rotor général » désigne un organe rotatif de ce vérin rotatif général, le terme « général » étant utilisé pour distinguer ce rotor d'un autre rotor éventuel du dispositif de renvoi. Le corps général peut être un stator d'un vérin rotatif général électrique le cas échéant.

Le vérin rotatif général est alors un vérin de trim éventuellement mis en parallèle d'une commande de vol. Lorsque le rotor général effectue une rotation, toute la tringlerie, y compris éventuellement la commande de vol associée, bouge avec lui. Le vérin rotatif général peut être à grande autorité, à savoir actif sur une grande amplitude, mais lent contrairement à l'actionneur linéaire qui peut être rapide et à faible autorité.

Cette configuration permet, sur un dispositif de renvoi unique, d'intégrer toutes les fonctions d'un système de pilotage automatique à savoir une fonction stabilisation via l'actionneur linéaire et une fonction de trim via le vérin rotatif général. Le montage dans un aéronef et notamment un giravion en est facilité car il n'y a plus de boites dispersées à intégrer dans chaque chaîne mécanique.

Selon un aspect, le levier amont peut comporter un bras qui s'étend radialement à partir d'un moyeu, ledit moyeu ayant une cavité, ledit actionneur linéaire étant agencé au moins partiellement dans cette cavité.

Cet agencement permet d'intégrer facilement l'actionneur linéaire dans le levier amont.

Selon un aspect, le cas échéant un rotor général peut être fixé au moyeu, au moins un système à roulements étant interposé entre le moyeu et le support fixe.

Par exemple, le moyeu comporte un cylindre qui s'étend radialement d'une face interne à une face externe, le levier amont et le rotor général étant solidaires de la face externe, la face interne portant l'actionneur linéaire.

De même un système à roulements peut être interposé entre le levier aval et un bâti fixe.

Selon un aspect, le levier amont et ledit levier aval comprennent chacun un unique degré de liberté, par exemple par rapport à un support du dispositif ou à un organe porteur d'un aéronef, ledit unique degré de liberté étant un degré de liberté en rotation autour dudit axe de rotation.

Des organes usuels tels que par exemple des paliers, des collerettes, des patins peuvent bloquer en translation selon ledit axe de rotation le levier amont et/ou le levier aval.

Selon un aspect, le dispositif de renvoi peut comporter un calculateur de pilotage automatique configuré pour contrôler directement ou indirectement l'actionneur linéaire.

Par exemple, le calculateur peut contrôler directement et électriquement un actionneur linéaire électrique ou peut contrôler indirectement l'actionneur linéaire par le biais d'un système hydraulique/pneumatique relié à un vérin de type hydraulique/pneumatique.

Le cas échéant, le calculateur peut aussi être configuré pour contrôler directement ou indirectement un vérin rotatif général.

Outre un dispositif de renvoi, l'invention vise un système de contrôle, et par exemple un système de contrôle d'un organe aérodynamique et éventuellement d'une pale.

Un système de contrôle est muni d'une commande et d'un organe mécanique, éventuellement un organe mécanique aérodynamique tel qu'une pale ou un volet, ladite commande étant manœuvrable par un pilote et ledit organe mécanique ayant une position pilotée par ladite commande, ledit système de contrôle comprenant une chaîne mécanique reliant la commande à l'organe mécanique,

Dès lors, la chaîne mécanique comporte au moins un dispositif de renvoi selon l'invention.

Le dispositif de renvoi selon l'invention peut être installé en lieu et place d'un dispositif de renvoi existant par exemple.

Outre un dispositif de renvoi, l'invention vise aussi un aéronef, et par exemple un aéronef ayant notamment une voilure tournante.

Un tel aéronef comporte au moins un dispositif de renvoi selon l'invention.

L'invention et ses avantages apparaîtront avec plus de détails dans le cadre de la description qui suit avec des exemples donnés à titre illustratif en référence aux figures annexées qui représentent :
[Fig 1] la figure 1, une vue d'un dispositif de renvoi ayant un vérin rotatif,
[Fig 2] la figure 2, une vue partielle d'une liaison hélicoïdale de sortie munie d'un écrou,
[Fig 3] la figure 3, une vue d'un dispositif de renvoi ayant un vérin linéaire, et
[Fig 4] la figure 4, un schéma illustrant un exemple de système de contrôle d'un aéronef muni d'un dispositif de renvoi.

Les éléments présents dans plusieurs figures distinctes sont affectés d'une seule et même référence.

Trois directions X, Y et Z orthogonales les unes par rapport aux autres sont représentées sur certaines figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

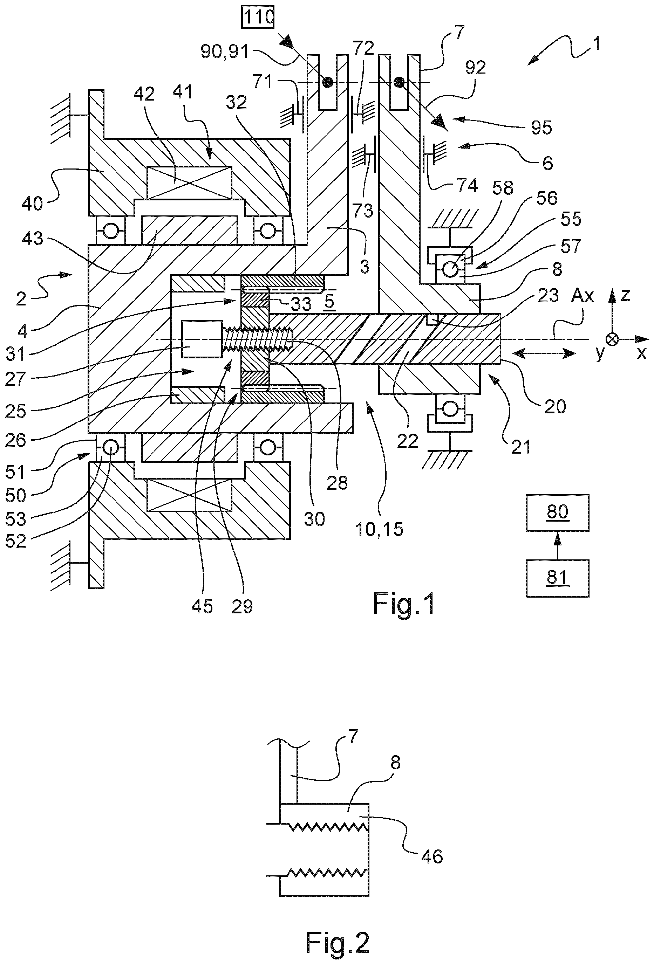

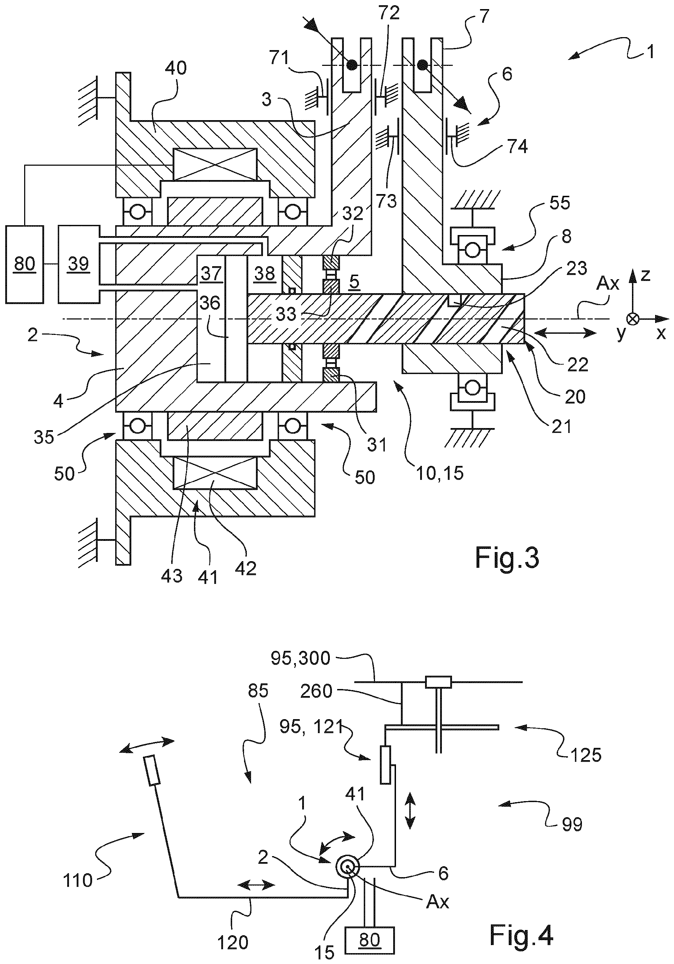

Les figures 1 et 3 présentent des dispositifs de renvoi 1 selon l'invention.

Indépendamment de la réalisation et en référence à la figure 1, un tel dispositif de renvoi 1 peut être agencé notamment sur une chaîne mécanique 90, par exemple une chaîne mécanique de commande de vol, entre une commande 110 et un organe mécanique 95 à commander. Un tel dispositif de renvoi 1 est parfois dénommé « guignol » par l'homme du métier.

Dès lors, le dispositif de renvoi 1 comporte un levier amont 2 muni de moyens usuels pour être articulé à une partie amont 91 de la chaîne mécanique 90. De même, le dispositif de renvoi 1 comporte un levier aval 6 muni de moyens usuels pour être articulé à une partie aval 92 de la chaîne mécanique 90. Les termes « amont » et « aval » font référence à un sens de propagation d'un ordre de déplacement entre la commande 110 et l'organe mécanique 95 à commander.

Le levier amont 2 est monté mobile en rotation autour d'un axe de rotation AX par des organes usuels.

Eventuellement, le levier amont 2 a un unique degré de liberté à savoir seulement un degré de liberté en rotation autour de l'axe de rotation AX. Des moyens de roulements 50 et/ou des organes de blocage 71,72 en translation peuvent usuellement être agencés à cet effet. Un tel organe de blocage peut par exemple prendre la forme d'un palier, d'une collerette, d'un patin, d'un épaulement...

Le levier amont 2 comporte par exemple un bras 3 solidaire d'un moyeu 4, le bras 3 s'étendant sensiblement radialement à partir du moyeu 4 au regard de l'axe de rotation AX.

De plus, au moins un système à roulements 50 peut être agencé entre le levier amont 2 et un support 40 fixe du dispositif. Par exemple, un système à roulements 50 comporte une cage interne 51 solidaire d'une face externe du moyeu 4, une cage externe 53 solidaire du support 40 et une pluralité de billes 52 ou un équivalent entre la cage interne 51 et la cage externe 53.

De même, le levier aval 6 est monté mobile en rotation autour de ce même axe de rotation AX. Le levier aval 6 peut avoir un unique degré de liberté à savoir un degré de liberté en rotation autour de l'axe de rotation AX. Des moyens de roulements 55 et/ou des organes de blocage 73,74 en translation peuvent usuellement être agencés à cet effet. Un tel organe de blocage peut par exemple prendre la forme d'un palier, d'une collerette, d'un patin, d'un épaulement... Le levier aval 6 comporte par exemple un bras 7 solidaire d'un moyeu 8, le bras 7 s'étendant sensiblement radialement à partir du moyeu 8 au regard de l'axe de rotation AX.

De plus, au moins un système à roulements 55 peut être agencé entre le levier aval 6 et un organe immobile. Par exemple, un système à roulements 55 comporte une cage interne 57 solidaire d'une face externe du moyeu 8, une cage externe 56 solidaire de l'organe immobile et une pluralité de billes 58 ou un équivalent entre la cage interne 57 et la cage externe 56.

Le bras 3, le moyeu 4, le bras 7 et le moyeu 8 sont éventuellement dénommés bras amont 3, moyeu amont 4, bras aval 7 et moyeu aval 8 pour être distingués les uns des autres.

Par ailleurs, le levier aval 6 est mobile en rotation conjointement avec le levier amont 2 mais aussi par rapport au levier amont 2 autour de l'axe de rotation AX. En particulier, une rotation autour de l'axe de rotation AX du levier amont 2 entraîne une rotation autour de l'axe de rotation AX du levier aval 6 mais le levier aval 6 possède un degré liberté en rotation autour de l'axe de rotation AX par rapport au levier amont 2.

A cet effet, le dispositif de renvoi 1 comporte un système de déphasage 10 interposé mécaniquement entre le levier amont 2 et le levier aval 6. Le système de déphasage 10 a notamment pour fonction d'une part d'engendrer automatiquement la rotation du levier aval 6 autour de l'axe de rotation AX lorsque le levier amont effectue une rotation autour de cet axe de rotation AX et, d'autre part de déplacer en rotation autour de l'axe de rotation AX par exemple sur requête d'un calculateur 80 le levier aval 6 par rapport au levier amont 2. Ainsi, un déplacement de la partie amont 91 de la chaine mécanique induit une rotation du levier amont 2, cette rotation du levier amont 2 engendrant une rotation du levier aval 6 via le système de déphasage 10. De plus, le calculateur 80 peut commander le système de déphasage 10 pour déplacer en rotation autour de l'axe de rotation AX le levier aval 6 sans déplacer le levier amont 2.

Ce calculateur 80 est configuré pour contrôler directement ou indirectement au moins un système de déphasage 10. Par exemple, le calculateur peut commander directement un système de déphasage 10 électrique ou peut commander un distributeur d'un système de déphasage 10 hydraulique ou pneumatique tel qu'illustré sur la figure 3. A cet effet, le calculateur 80 peut être relié à des senseurs 81 divers et peut appliquer des lois usuelles. Le calculateur 80 peut comprendre par exemple au moins un processeur et au moins une mémoire, au moins un circuit intégré, au moins un système programmable, au moins un circuit logique, ces exemples ne limitant pas la portée donnée à l'expression « calculateur ».

Par ailleurs, le système de déphasage 10 est pourvu d'un actionneur linéaire 15 commandé par un calculateur 80. Cet actionneur linéaire 15 présente une longueur variable selon l'axe de rotation AX, l'actionneur linéaire 15 pouvant alors être rétréci ou étendu sur requête du calculateur 80.

L'actionneur linéaire 15 est porté par le levier amont 2. Dès lors, cet actionneur linéaire 15 est muni d'au moins un organe fixé par des moyens usuels au levier amont 2. Par exemple et le cas échéant, le moyeu 4 est muni d'une une cavité 5 dans laquelle est agencé au moins partiellement l'actionneur linéaire 15.

Cet actionneur linéaire 15 a en outre une tige de sortie 20 qui est mobile en translation selon l'axe de rotation AX lorsque l'actionneur linéaire 15 est étendu ou rétracté. Cette tige de sortie 20 présente au moins un degré de liberté par rapport au levier amont 2, à savoir au minimum un degré de liberté en translation selon l'axe de rotation AX par rapport au levier amont 2.

Eventuellement, la tige de sortie 20 présente uniquement un degré de liberté par rapport au levier amont 2, à savoir ce degré de liberté en translation selon l'axe de rotation AX par rapport au levier amont 2.

Par conséquent, une rotation du levier amont 2 autour de l'axe de rotation AX induit une rotation de la tige de sortie 20 autour de l'axe de rotation AX. De plus, l'actionneur linéaire 15 peut déplacer la tige de sortie 20 en translation par rapport au levier amont 2 sans incidence sur la position de ce levier amont 2.

De plus, la tige de sortie 20 est reliée par une liaison hélicoïdale de sortie 21 au levier aval 6 pour qu'une translation de la tige de sortie 20 génère une rotation du levier aval 6 autour de l'axe de rotation AX. La liaison hélicoïdale de sortie 21 peut être une liaison irréversible dans le sens ou la liaison hélicoïdale de sortie 21 peut être dimensionnée afin qu'une rotation du levier aval n'induise pas une translation de la tige de sortie 20. Une telle liaison peut être dimensionnée de manière usuelle.

Selon une possibilité, la liaison hélicoïdale de sortie 21 peut comporter une gorge en hélice de sortie 22 et un pion de sortie 23 coopérant avec le gorge hélice de sortie 22. Ainsi, le pion de sortie 23 peut être mobile dans la gorge en hélice de sortie 22. Une telle liaison hélicoïdale de sortie 21 peut présenter un pas important et par exemple plus important qu'un système vis/écrou. Deux configurations sont envisageables : soit la gorge en hélice de sortie 22 est ménagée dans la tige de sortie 20 et le pion de sortie 23 s'étend radialement à partir du levier aval 6 jusque dans la gorge de la tige de sortie 20, soit la gorge en hélice de sortie 22 est ménagée dans une paroi du levier aval 6 et le pion de sortie 23 s'étend radialement à partir de la tige de sortie 20 jusque dans la gorge en hélice de sortie 22 du levier aval 6.

Selon la possibilité décrite sur la figure 2, la liaison hélicoïdale de sortie 21 peut comporter un écrou de sortie 46 solidaire du levier aval 6. Par exemple, le moyeu du levier aval 6 comporte une noix-écrou. L'écrou de sortie 46 comprend alors un taraudage en prise sur un taraudage de la tige de sortie 20 de manière à former un système vis/écrou.

Selon un autre aspect, le dispositif de renvoi 1 peut comporter un vérin de trim dénommé « vérin rotatif général 41 ».

Un tel vérin rotatif général 41 comprenant un rotor dénommé « rotor général 43 » par commodité et un stator dénommé « corps général 42 » par commodité. Le rotor général 43 est alors solidaire du levier amont 2, par exemple en étant fixé à une face externe du moyeu 4 du levier amont 2. Le corps général 42 est solidaire d'un support fixe 40, le rotor général 43 étant mobile en rotation par rapport au corps général 42 autour de l'axe de rotation. Le vérin rotatif général 41 peut être par exemple un moteur électrique avec ou sans balai usuel.

Dès lors, le vérin rotatif général 41 peut être activé pour provoquer une rotation du rotor général 43 par rapport au corps général 42. Cette rotation induit de fait une rotation du levier amont 2 et par suite une rotation du levier aval 6 autour de l'axe de rotation AX via le système de déphasage 10.

Indépendamment de la présence ou non d'un vérin de trim, l'actionneur linéaire peut comprendre un vérin linéaire ou rotatif pour mettre en translation la tige de sortie.

Selon la première réalisation de la figure 1 l'actionneur linéaire 15 peut comporter un vérin rotatif intermédiaire 25, et par exemple un vérin rotatif intermédiaire 25 électrique.

Le vérin rotatif intermédiaire 25 est alors muni d'un corps intermédiaire 26 solidarisé au levier amont 2. Par exemple, le corps intermédiaire 26 est un stator d'un moteur électrique et/ou est fixé dans la cavité 5 du moyeu du levier amont 2.

Le vérin rotatif intermédiaire 25 est aussi muni d'un rotor intermédiaire 27 mobile en rotation par rapport au corps intermédiaire 26 autour de l'axe de rotation AX. Le rotor intermédiaire 27 est alors mécaniquement relié à la tige de sortie 20 par un système 45 de transformation d'un mouvement rotatif en un mouvement translatif.

Par exemple, le rotor intermédiaire 27 est solidaire voire intégré à une tige intermédiaire 28. Cette tige intermédiaire 28 est reliée à la tige de sortie 20 par le système 45 de transformation d'un mouvement rotatif en un mouvement translatif au travers d'une liaison hélicoïdale d'entrée 29 éventuellement irréversible. Cette tige intermédiaire 28 est alors uniquement mobile en rotation par rapport au levier amont 2 et est reliée à la tige de sortie 20 au moins par une liaison hélicoïdale d'entrée 29. Cette liaison hélicoïdale d'entrée 29 est dimensionnée pour qu'une rotation de la tige intermédiaire 28 induise une translation de la tige de sortie. Eventuellement, la liaison hélicoïdale d'entrée 29 présente un pas de vis inférieur à un pas de vis de la liaison hélicoïdale de sortie 21.

Selon l'exemple illustré, la tige intermédiaire 28 est une vis sans fin. La liaison hélicoïdale d'entrée 29 comporte alors un écrou intermédiaire 30 ayant un taraudage en prise avec un taraudage de la tige intermédiaire 28. Cet écrou intermédiaire 30 est solidaire de la tige de sortie 20. Par exemple, l'écrou intermédiaire 30 est fixé de manière usuelle à la tige de sortie 20 ou représente une partie de la tige de sortie 20.

L'écrou intermédiaire 30 et/ou la tige de sortie 20 sont solidarisés en rotation au levier amont 2 autour de l'axe de rotation AX par des moyens usuels. Selon l'exemple illustré, une liaison glissière 31 à cannelures 32/33 lie en rotation l'écrou intermédiaire 30 et le levier amont 2.

Selon d'autres exemples non illustrés une liaison glissière à clavette lie en rotation l'écrou intermédiaire 30 et le levier amont 2, et/ou une liaison glissière à cannelures lie en rotation la tige de sortie 20 et le levier amont 2, et/ou une liaison glissière à clavette lie en rotation la tige de sortie 20 et le levier amont 2. Dans ces divers exemples, la liaison glissière peut être remplacée par une liaison pivot glissante ou une liaison sphère-cylindre, ou deux liaisons sphère-plan symétriques.

Dès lors, une rotation du levier amont 2 entraîne une rotation éventuellement sensiblement identique de la tige de sortie 20, par la liaison glissière 31 ou un équivalent voire via l'écrou intermédiaire 30, la tige de sortie 20 induisant la rotation du levier aval 6 par la liaison hélicoïdale de sortie 21.

En outre, une rotation du rotor intermédiaire 27 induit une rotation de la tige intermédiaire 28 et par suite la translation de l'écrou intermédiaire 30 et de la tige de sortie 20, la translation de la tige de sortie 20 induisant la rotation du levier aval 6 par la liaison hélicoïdale de sortie 21

Selon la deuxième réalisation de la figure 3, l'actionneur linéaire 15 comporte un vérin linéaire 35 muni de la tige de sortie 20.

Selon l'exemple illustré, un vérin linéaire 35 hydraulique ou pneumatique comporte deux chambres 37, 38 à volumes variables séparées par un piston 36. Les deux chambres sont reliées à un distributeur hydraulique/pneumatique 39 commandé par le calculateur 80. Le piston 36 est alors solidaire de la tige de sortie 20.

A l'instar de la réalisation précédente, la tige de sortie 20 et/ou le piston 36 est relié au levier amont 2 par une liaison glissière 31 ou un équivalent.

Dès lors, une rotation du levier amont 2 entraîne une rotation de la tige de sortie 20 par la liaison glissière 31 ou un équivalent voire le piston 36, la tige de sortie 20 induisant la rotation du levier aval 6 par la liaison hélicoïdale de sortie 21.

En outre, une translation du piston 36 induit une translation de la tige de sortie 20, la translation de la tige de sortie 20 induisant la rotation du levier aval 6 par la liaison hélicoïdale de sortie 21.

La figure 4 illustre un exemple de système de contrôle 85 muni d'un dispositif de renvoi 1 interposé entre une commande 110 et un organe mécanique 95, éventuellement sur un aéronef 99. Par exemple, une telle commande 110 peut prendre la forme d'un manche ou d'un levier, tel qu'un manche cyclique ou un levier collectif de commande de pas utilisés pour commander le pas de pales d'un giravion. Eventuellement, l'organe mécanique 95 peut ainsi comprendre un organe aérodynamique de pilotage tel qu'une pale 300 ou une servocommande 121 apte à modifier le pas d'une telle pale 300.

Selon l'exemple fourni à titre illustratif, la commande est reliée par au moins une bielle 91, 120 au levier amont 2 d'un dispositif de renvoi 1 selon l'invention. Le levier aval 6 est alors relié par au moins une bielle 92 à une servocommande 121. Cette servocommande 121 comporte un corps mobile ou une tige de puissance mobile qui est articulée à un plateau non tournant d'un ensemble de plateaux cycliques 125. Cet ensemble de plateaux cyclique 125 comprend de plus un plateau tournant relié au moins par une bielle de pas 260 à une pale 300.

Le dispositif de renvoi 1 peut être agencé sur un combinateur éventuellement.

En outre, l'actionneur linéaire 15 et le cas échant le vérin rotatif général 41 du dispositif de renvoi 1 sont reliés respectivement à deux harnais qui débouchent notamment sur un calculateur 80.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Dispositif de renvoi (1) muni d'un levier amont (2) et d'un levier aval (6),
le dispositif de renvoi (1) comporte un système de déphasage (10) relié au levier amont (2) et au levier aval (6) **caractérisé en ce qu'**une rotation du levier amont (2) autour d'un axe de rotation (AX) induit une rotation du levier aval (6) autour de cet axe de rotation (AX), le système de déphasage (10) comprenant un actionneur linéaire (15) porté par le levier amont (2), ledit actionneur linéaire (15) ayant une tige de sortie (20), ladite tige de sortie (20) ayant uniquement un degré de liberté en translation par rapport au levier amont (2), ladite tige de sortie (20) étant reliée par une liaison hélicoïdale de sortie (21) au levier aval (6) pour qu'une translation de la tige de sortie (20) génère une rotation du levier aval (6) autour dudit axe de rotation (AX) par rapport au levier amont.

2. Dispositif de renvoi selon la revendication 1,
**caractérisé en ce que** ledit actionneur linéaire (15) comporte un vérin linéaire (35) muni de la tige de sortie (20).

3. Dispositif de renvoi selon la revendication 1,
**caractérisé en ce que** ledit actionneur linéaire (15) comporte un vérin rotatif intermédiaire (25), ledit vérin rotatif intermédiaire (25) comprenant une tige intermédiaire (28) mobile en rotation, la tige intermédiaire (28) étant reliée à la tige de sortie (20) par un système (45) de transformation d'un mouvement rotatif en un mouvement translatif.

4. Dispositif de renvoi selon la revendication 3,
**caractérisé en ce que** ledit système (45) de transformation d'un mouvement rotatif en un mouvement translatif comporte une liaison hélicoïdale d'entrée (29).

5. Dispositif de renvoi selon la revendication 4,
**caractérisé en ce que** la liaison hélicoïdale d'entrée (29) comporte un écrou intermédiaire (30) en prise sur la tige intermédiaire (28), ledit écrou intermédiaire (30) étant solidaire en rotation du levier amont (2) et mobile en translation par rapport au levier amont (2), ledit écrou intermédiaire (30) étant solidaire de la tige de sortie (20).

6. Dispositif de renvoi selon l'une quelconque des revendications 1 à 5,
**caractérisé en ce qu'**au moins ladite tige de sortie (20) ou un écrou intermédiaire (30) solidaire de la tige de sortie (20) est relié au levier amont (2) par au moins une liaison liant en rotation autour de l'axe de rotation le levier amont et la tige de sortie.

7. Dispositif de renvoi selon la revendication 6,
**caractérisé en ce que** ladite au moins une liaison comprend une liaison glissière (31) comportant au moins une cannelure ou une clavette.

8. Dispositif de renvoi selon l'une quelconque des revendications 1 à 7,
**caractérisé en ce que** ladite liaison hélicoïdale de sortie (21) comporte un écrou de sortie (46) solidaire du levier aval (6), ledit écrou de sortie (46) comprenant un taraudage en prise sur un taraudage complémentaire de ladite tige de sortie (20).

9. Dispositif de renvoi selon l'une quelconque des revendications 1 à 7,
**caractérisé en ce que** ladite liaison hélicoïdale de sortie (21) comporte une gorge en hélice de sortie (22) et un pion de sortie (23) de forme complémentaire disposé au moins partiellement dans la gorge en hélice de sortie (22), la gorge en hélice de sortie (22) étant portée par la tige de sortie (20) et le pion de sortie (23) étant porté par le levier aval (6) ou la gorge en hélice de sortie (22) étant portée par le levier aval (6) et le pion de sortie (23) étant porté par la tige de sortie (20).

10. Dispositif de renvoi selon l'une quelconque des revendications 1 à 9,
**caractérisé en ce que** ledit dispositif de renvoi (1) comporte un vérin rotatif général (41), ledit vérin rotatif général (41) comprenant un rotor général (43) solidaire du levier amont (2), ledit vérin rotatif général (41) comprenant un corps général (42) solidaire d'un support fixe (40), le rotor général (43) étant mobile en rotation par rapport au corps général (42).

11. Dispositif de renvoi selon l'une quelconque des revendications 1 à 10,
**caractérisé en ce que** ledit levier amont (2) comporte un bras (3) qui s'étend radialement à partir d'un moyeu (4), ledit moyeu (4) ayant une cavité (5), ledit actionneur linéaire (15) étant agencé au moins partiellement dans cette cavité (5).

12. Dispositif de renvoi selon les revendications 10 et 11,
**caractérisé en ce que** ledit rotor général (43) est fixé au moyeu (4), au moins un système à roulements (50) étant interposé entre le moyeu (4) et le support (40).

13. Dispositif de renvoi selon l'une quelconque des revendications 1 à 12,
**caractérisé en ce que** ledit levier amont (2) et ledit levier aval (6) comprennent chacun un unique degré de liberté, ledit unique degré de liberté étant un degré de liberté en rotation autour dudit axe de rotation (AX).

14. Dispositif de renvoi selon l'une quelconque des revendications 1 à 13,
**caractérisé en ce que** ledit dispositif de renvoi (1) comporte un calculateur (80) de pilotage automatique configuré pour contrôler directement ou indirectement l'actionneur linéaire (15).

15. Système de contrôle (85) muni d'une commande (110) et d'un organe mécanique (300), ladite commande (110) étant manœuvrable par un pilote et ledit organe mécanique (95) ayant une position pilotée par ladite commande (110), ledit système de contrôle (85) comprenant une chaîne mécanique (90) reliant la commande (110) à l'organe mécanique (95),
**caractérisé en ce que** ladite chaîne mécanique (90) comporte au moins un dispositif de renvoi (1) selon l'une quelconque des revendications 1 à 14.

16. Aéronef (99),
**caractérisé en ce que** ledit aéronef (99) comporte au moins un dispositif de renvoi (1) selon l'une quelconque des revendications 1 à 14.

## Patentansprüche

1. Umlenkvorrichtung (1) mit einem vorgelagerten Hebel (2) und einem nachgelagerten Hebel (6),wobei die Umlenkvorrichtung (1) ein Phasenverschiebungssystem (10) umfasst, das mit dem vorgelagerten Hebel (2) und dem nachgelagerten Hebel (6) verbunden ist,
**dadurch gekennzeichnet, dass** eine Drehung des vorgelagerten Hebels (2) um eine Drehachse (AX) eine Drehung des nachgelagerten Hebels (6) um diese Drehachse (AX) induziert, wobei das Phasenverschiebungssystem (10) einen von dem vorgelagerten Hebel (2) getragenen linearen Aktuator (15) umfasst, wobei der lineare Aktuator (15) eine Abtriebsstange (20) aufweist, wobei die Abtriebsstange (20) in Bezug auf den vorgelagerten Hebel (2) nur einen Freiheitsgrad in der Translation aufweist, wobei die Abtriebsstange (20) durch ein schraubenförmiges Abtriebsglied (21) mit dem nachgelagerten Hebel (6) verbunden ist, so dass eine Translation der Abtriebsstange (20) eine Rotation des nachgelagerten Hebels (6) um die Drehachse (AX) in Bezug auf den vorgelagerten Hebel hervorruft.

2. Umlenkvorrichtung nach Anspruch 1,
**dadurch gekennzeichnet, dass** der lineare Aktuator (15) einen linearen Stellantrieb (35) umfasst, der mit der Abtriebsstange (20) versehen ist.

3. Umlenkvorrichtung nach Anspruch 1,
**dadurch gekennzeichnet, dass** der lineare Aktuator (15) einen zwischengeschalteten Drehstellantrieb (25) umfasst, wobei der zwischengeschaltete Drehstellantrieb (25) eine zwischengeschaltete Stange (28) umfasst, die drehbar ist, wobei die zwischengeschaltete Stange (28) mit der Abtriebsstange (20) durch ein System (45) zum Umwandeln einer Drehbewegung in eine translatorische Bewegung verbunden ist.

4. Umlenkvorrichtung nach Anspruch 3,
**dadurch gekennzeichnet, dass** das System (45) zum Umwandeln einer Drehbewegung in eine translatorische Bewegung eine Antriebs-Schraubenverbindung (29) umfasst.

5. Umlenkvorrichtung nach Anspruch 4,
**dadurch gekennzeichnet, dass** die Antriebs-Schraubenverbindung (29) eine Zwischenmutter (30) in Eingriff mit der zwischengeschalteten Stange (28) umfasst, wobei die Zwischenmutter (30) drehfest mit dem vorgelagerten Hebel (2) verbunden und in Bezug auf den vorgelagerten Hebel (2) verschiebbar ist, wobei die Zwischenmutter (30) fest mit der Abtriebsstange (20) verbunden ist.

6. Umlenkvorrichtung nach einem der Ansprüche 1 bis 5,
**dadurch gekennzeichnet, dass** zumindest die Abtriebsstange (20) oder eine mit der Abtriebsstange (20) fest verbundene Zwischenmutter (30) mit dem vorgelagerten Hebel (2) durch mindestens ein Verbindungsglied verbunden ist, das den vorgelagerten Hebel und die Abtriebsstange in Drehung um die Drehachse verbindet.

7. Umlenkvorrichtung nach Anspruch 6,
**dadurch gekennzeichnet, dass** die mindestens eine Verbindung eine Gleitverbindung (31) umfasst, die mindestens eine Keilnut oder eine Passfeder aufweist.

8. Umlenkvorrichtung nach einem der Ansprüche 1 bis 7,
**dadurch gekennzeichnet, dass** das schraubenförmige Abtriebsglied (21) eine mit dem nachgelagerten Hebel (6) fest verbundene Abtriebsmutter (46) aufweist, wobei die Abtriebsmutter (46) ein Gewinde aufweist, das in ein komplementäres Gewinde der Abtriebsstange (20) eingreift.

9. Umlenkvorrichtung nach einem der Ansprüche 1 bis 7,
**dadurch gekennzeichnet, dass** das schraubenförmige Abtriebsglied (21) eine Abtriebswendelnut (22) und einen Abtriebszapfen (23) von komplementärer Form umfasst, der zumindest teilweise in der Abtriebswendelnut (22) angeordnet ist, wobei die Abtriebswendelnut (22) von der Abtriebsstange (20) und der Abtriebszapfen (23) von dem nachgelagerten Hebel (6) getragen ist oder die Abtriebswendelnut (22) von dem nachgelagerten Hebel (6) und der Abtriebszapfen (23) von der Abtriebsstange (20) getragen ist.

10. Umlenkvorrichtung nach einem der Ansprüche 1 bis 9,
**dadurch gekennzeichnet, dass** die Umlenkvorrichtung (1) ein allgemeines Drehstellglied (41) umfasst, wobei das allgemeine Drehstellglied (41) einen mit dem vorgelagerten Hebel (2) fest verbundenen allgemeinen Rotor (43) umfasst, wobei das allgemeine Drehstellglied (41) einen mit einem festen Träger (40) fest verbundenen allgemeinen Körper (42) umfasst, wobei der allgemeine Rotor (43) in Bezug auf den allgemeinen Körper (42) drehbar ist.

11. Umlenkvorrichtung nach einem der Ansprüche 1 bis 10,
**dadurch gekennzeichnet, dass** der vorgelagerte Hebel (2) einen Arm (3) umfasst, der sich radial von einer Nabe (4) aus erstreckt, wobei die Nabe (4) einen Hohlraum (5) aufweist, wobei der lineare Aktuator (15) zumindest teilweise in diesem Hohlraum (5) angeordnet ist.

12. Umlenkvorrichtung nach den Ansprüchen 10 und 11,
**dadurch gekennzeichnet, dass** der allgemeine Rotor (43) an der Nabe (4) befestigt ist, und dass mindestens ein Lagersystem (50) zwischen der Nabe (4) und dem Träger (40) angeordnet ist.

13. Umlenkvorrichtung nach einem der Ansprüche 1 bis 12,
**dadurch gekennzeichnet, dass** der vorgelagerte Hebel (2) und der nachgelagerte Hebel (6) jeweils einen einzigen Freiheitsgrad aufweisen, und dass der einzige Freiheitsgrad ein Rotationsfreiheitsgrad um die Drehachse (AX) ist.

14. Umlenkvorrichtung nach einem der Ansprüche 1 bis 13,
**dadurch gekennzeichnet, dass** die Umlenkvorrichtung (1) einen automatischen Steuercomputer (80) umfasst, der konfiguriert ist, um den linearen Aktuator (15) direkt oder indirekt zu steuern.

15. Steuersystem (85), das mit einer Steuerung (110) und einem mechanischen Element (300) versehen ist, wobei die Steuerung (110) durch einen Piloten betätigbar ist und das mechanische Element (95) eine durch die Steuerung (110) gesteuerte Position aufweist, wobei das Steuersystem (85) einen mechanischen Strang (90) umfasst, der die Steuerung (110) mit dem mechanischen Element (95) verbindet,
**dadurch gekennzeichnet, dass** der mechanische Strang (90) mindestens eine Umlenkvorrichtung (1) nach einem der Ansprüche 1 bis 14 umfasst.

16. Luftfahrzeug (99),
**dadurch gekennzeichnet, dass** das Luftfahrzeug (99) mindestens eine Umlenkvorrichtung (1) nach einem der Ansprüche 1 bis 14 aufweist.

## Claims

1. Crank device (1) provided with an upstream lever (2) and a downstream lever (6), the crank device (1) comprising a phase shift system (10) connected to the upstream lever (2) and to the downstream lever (6), **characterised in that** a rotation of the upstream lever (2) about an axis of rotation (AX) induces a rotation of the downstream lever (6) about said axis of rotation (AX), the phase shift system (10) including a linear actuator (15) carried by the upstream lever (2), said linear actuator (15) having an output rod (20), said output rod (20) having only one degree of freedom in translation relative to the upstream lever (2), said output rod (20) being connected by a helical output link (21) to the downstream lever (6) so that a translation of the output rod (20) generates a rotation of the downstream lever (6) about said axis of rotation (AX) relative to the upstream lever.

2. Crank device according to claim 1, **characterised in that** said linear actuator (15) comprises a linear cylinder (35) provided with the output rod (20).

3. Crank device according to claim 1, **characterised in that** said linear actuator (15) comprises an intermediate rotary cylinder (25), said intermediate rotary cylinder (25) including an intermediate rod (28) that is rotatable, the intermediate rod (28) being connected to the output rod (20) by a system (45) for transforming a rotary movement into a translational movement.

4. Crank device according to claim 3, **characterised in that** said system (45) for transforming a rotary movement into a translational movement comprises a helical input link (29).

5. Crank device according to claim 4, **characterised in that** the helical input link (29) comprises an intermediate nut (30) engaged on the intermediate rod (28), said intermediate nut (30) being connected to the upstream lever (2) for conjoint rotation and being translatable relative to the upstream lever (2), said intermediate nut (30) being rigidly connected to the output rod (20).

6. Crank device according to any of claims 1 to 5, **characterised in that** at least said output rod (20) or an intermediate nut (30) rigidly connected to the output rod (20) is connected to the upstream lever (2) by at least one link linking the upstream lever and the output rod in rotation about the axis of rotation.

7. Crank device according to claim 6, **characterised in that** said at least one link includes a sliding link (31) comprising at least one spline or a key.

8. Crank device according to any of claims 1 to 7, **characterised in that** said helical output link (21) comprises an output nut (46) that is rigidly connected to the downstream lever (6), said output nut (46) including a thread engaged on a complementary thread of said output rod (20).

9. Crank device according to any of claims 1 to 7, **characterised in that** said helical output link (21) comprises a helical output groove (22) and an output pin (23) of complementary shape arranged at least partly in the helical output groove (22), the helical output groove (22) being carried by the output rod (20) and the output pin (23) being carried by the downstream lever (6) or the helical output groove (22) being carried by the downstream lever (6) and the output pin (23) being carried by the output rod (20).

10. Crank device according to any of claims 1 to 9, **characterised in that** said crank device (1) comprises a general rotary cylinder (41), said general rotary cylinder (41) including a general rotor (43) that is rigidly connected to the upstream lever (2), said general rotary cylinder (41) including a general body (42) that is rigidly connected to a fixed support (40), the general rotor (43) being rotatable relative to the general body (42).

11. Crank device according to any of claims 1 to 10, **characterised in that** said upstream lever (2) comprises an arm (3) which extends radially from a hub (4), said hub (4) having a cavity (5), said linear actuator (15) being arranged at least partly in said cavity (5).

12. Crank device according to claims 10 and 11, **characterised in that** said general rotor (43) is secured to the hub (4), at least one bearing system (50) being interposed between the hub (4) and the support (40).

13. Crank device according to any of claims 1 to 12, **characterised in that** said upstream lever (2) and said downstream lever (6) each include a single degree of freedom, said single degree of freedom being a degree of freedom in rotation about said axis of rotation (AX).

14. Crank device according to any of claims 1 to 13, **characterised in that** said crank device (1) comprises an automatic control computer (80) configured to directly or indirectly control the linear actuator (15).

15. Control system (85) provided with a control (110) and a mechanical member (300), said control (110) being operable by a pilot and said mechanical member (95) having a position controlled by said control (110), said control system (85) including a mechanical chain (90) connecting the control (110) to the mechanical member (95), **characterised in that** said mechanical chain (90) comprises at least one crank device (1) according to any of claims 1 to 14.

16. Aircraft (99), **characterised in that** said aircraft (99) comprises at least one crank device (1) according to any of claims 1 to 14.
